# EUROPÄISCHE PATENTSCHRIFT

(11) **EP 0 513 582 B1**
(45) Veröffentlichungstag und Bekanntmachung des Hinweises auf die Patenterteilung: **02.07.1997**
(21) Anmeldenummer: 92107086.8
(22) Anmeldetag: 25.04.1992
(51) Int. Cl.: A01C 7/08, B65G 53/42

(54) **Fördersystem für körniges Gut und Verfahren**
System and method for conveying granular material
Système et méthode de transport du matériel granulaire

(30) Priorität: 17.05.1991 US 701939
(43) Veröffentlichungstag der Anmeldung: 19.11.1992
(73) Patentinhaber: DEERE & COMPANY, Moline, Illinois 61265 (US)
(72) Erfinder: Landphair, Donald Keith, Bettendorf, Iowa 52722 (US); Neumeyer, Lowell Henry, Des Moines, Iowa 50312 (US); Rylander, David James, Victoria, Illinois 61485 (US)
(74) Vertreter: Feldmann, Bernhard

(56) Entgegenhaltungen:
- FR-A- 1 361 034
- US-A- 3 548 765
- US-A- 4 060 181
- US-A- 4 733 824

## Beschreibung

Die Erfindung betrifft ein Fördersystem für körniges Gut, insbesondere für eine Sämaschine zum Ausbringen von Saatgut, mit einem Behälter für das Gut, wenigstens einer Reihensäeinheit, wenigstens einer Leitung, die einenends zur Aufnahme von Gut direkt oder über ein Endstück in den Behälter mündet und anderenends Gut an die Reihensäeinheit abgibt, und einem Gebläse, das über einen Förderluftausgang den Behälter unter Druck setzt, sowie ein Verfahren zum pneumatischen Austragen von Gut, insbesondere von Saatgut, aus einem Behälter mit einem in diesen mündenden Förderluftausgang und einer Leitung bzw. einem Endstück der Leitung zur Entfernung des Guts.

Die US-A-3,548,765 offenbart eine Sämaschine mit einem Hauptbehälter zur Aufnahme von Saatgut und mehreren aus diesem mit Saatgut gespeisten Nebenbehältern, die auf voneinander unabhängige Reihensäeinheiten aufgesetzt sind und das Saatgut vor der dosierten Abgabe in eine Furche mittels eines Meßrades zwischenspeichern. Mit Abstand zu dem Boden des Hauptbehälters ist ein Sieb vorgesehen, auf dem das Saatgut lagert. Unterhalb des Siebs ergibt sich somit eine Kammer, die von einem Gebläse mit Druckluft gefüllt wird, die durch das Sieb das Saatgut durchdringt und den luftdichten Behälter insgesamt unter Druck setzt. Oberhalb des Siebs mündet eine Leitung in den Hauptbehälter, in die das Saatgut aufgrund der Luftströmung eintreten und somit dem Nebenbehälter zugeführt werden soll.

Diese Sämaschine ist insofern nachteilig, als ein zuverlässiger Eintritt des Saatguts in die Leitung sehr stark von der Beschaffenheit des Saatguts, der Dicke der Saatgutmatte und dergleichen abhängig ist.

Bei einem Fördersystem einer aus der US-A-4,060,181 bekannten Sämaschine wird das Saatgut unter Ausnutzung des Venturi-Effekts ausgetragen, d. h. mittels eines die Richtung nicht ändernden Luftstroms, der in seinem Außenbereich einen Sog aufbaut, der Gut mitreißt.

Bei diesem Fördersystem ist eine Gutmitnahme bei kompaktem Gut ebenfalls problematisch.

Die Anwendung des Venturi-Effekts zum Austragen von Pulver ist auch für andere Anwendungszwecke z. B. aus der US-A-2,955,877 bekannt.

Die FR-1.361.034 offenbart eine Austragsvorrichtung für ein druckloses Silo mit einem Saugrohr, das nach eine dargestellten Ausführungsbeispiel in einem Luftführungsrohr aufgenommen ist und in der Höhe verstellt werden kann. Sobald eine nicht gezeigte Saugvorrichtung in Betrieb gesetzt ist, wird Schüttgut aus dem Silo durch das Saugrohr entnommen. Druckluft wird nicht zugeführt.

Die der Erfindung zugrunde liegende Aufgabe wird darin gesehen, ein Fördersystem bzw. ein Verfahren vorzuschlagen, die eine sichere Gutannahme gewährleisten und mit einfachen Mitteln ausführbar sind.

Diese Aufgabe wird erfindungsgemäß durch die Lehre der Patentansprüche 1 bzw. 13 gelöst, wobei in den jeweils weiteren Patentansprüchen Merkmale aufgeführt sind, die die Lösung in vorteilhafter Weise weiterentwickeln.

Auf diese Weise findet im unmittelbaren Bereich der einströmenden Luft eine Wirbel- und Turbulenzenbildung statt, die das Gut lockert und in einem innerhalb des Guts gebildeten kuppelförmigen Bereich umherwirbelt, so daß das Gut von der zu der Leitung ausströmenden Luft ausgetragen werden kann. Anders als im Stand der Technik kommt es nicht auf einen Mitnahmeeffekt aufgrund einer Sogwirkung an, sondern das Gut wird direkt beaufschlagt und in den Luftstrom einbezogen.

Es wird darauf hingewiesen, daß der Begriff "Luft" nicht beschränkend benutzt ist, sondern daß er für die Gattung "Gas" an sich steht, also auch andere Gase oder Gasgemische erfaßt.

Eine umfassende Wirbelbildung und die Einleitung der Luft in unmittelbarer Nachbarschaft zu deren Austrittsstelle ist insbesondere dann gegeben, wenn die Leitung bzw. das Endstück koaxial zu und innerhalb des Förderluftausgangs und mit Abstand zu diesem angeordnet ist.

Die geneigte Anordnung der Leitung und des Förderluftausgangs zu der Horizontalen in einem Bereich oberhalb und vorzugsweise bei 35 Grad stellt sicher, daß es in der Leitung nicht zu einer Verstopfung kommt und der Luftstrom das Gut noch mitnehmen, d. h. anheben kann.

Die Einwirkung des Luftstroms auf das Gut und die Gefahr des Zusetzens der Leitung durch Gut kann verringert werden, wenn die Leitung bzw. deren Endstück innerhalb des Förderluftausgangs vor dem Förderluftausgang endet, d. h. zwischen beiden Kanten ein Abstand bleibt. Eine Anpassung an die verschiedenen Zustände oder Art der Güter ist möglich, wenn der vorgenannte Abstand einstellbar ist.

Eine strömungsverlustarme Zuführung der Luft in den Behälter durch den Ringraum zwischen dem Förderluftausgang und der Leitung bzw. dem Endstück wird erreicht, wenn dieser Ringraum rund ist, anstatt mehreckig.

Der Nutzen der Erfindung wird umso größer, wenn mittels des erfindungsgemäßen Fördersystems eine Vielzahl von Reihensäeinheiten beschickt werden, wobei eine Teileeinsparung dadurch erreicht werden kann, daß nicht jedem Förderluftausgang separat Druckluft zugeführt wird, sondern diese über einen allen Förderluftausgängen gemeinsamen und diese aufnehmenden Luftverteiler in den Behälter gelangt. Hierzu sind die Förderluftausgänge und die Leitungen bzw. Endstücke in der angegebenen Weise in die Wandungen des Luftverteilers eingesetzt.

Die Zufuhr des Guts zu der Reihensäeinheit bedeutet nicht unbedingt, daß dieses auch direkt in den Boden abgelegt wird; vielmehr kann es auch zunächst einem Zweitbehälter aufgegeben werden, in dem es zwischenlagert und mittels einer Zumeßvorrichtung entnommen wird.

Zur Vermeidung einer Überfüllung des Zweitbehälters ist eine automatische Füllbegrenzung vorgesehen, die darin besteht, daß die Leitung bzw. ein an diese endseitig angeschlossenes Abgabeende, das die Form eines Rohrwinkels haben kann, mit seiner Unterkante in der Höhe eines gewünschten Füllstands des Guts enden kann. Sobald das eingefüllte Gut an diese untere, vorzugsweise horizontale Kante heranreicht, wird die Luft am Austritt gehindert und eine weitere Gutzufuhr unterbrochen.

Für den Fall der Entleerung des Behälters, weil noch Gut übrig geblieben ist, ist eine Putztür in dessen unteren Bereich vorgesehen.

Mit dem erfindungsgemäßen Verfahren wird gelehrt, wie die Strömungsvorgänge einzurichten sind, damit die gewünschte Förderwirkung eintritt.

Insbesondere die Strömungsrichtungsumkehr von 180 Grad sorgt für ein besonders effektives Mitreißen des Guts in die Leitung.

Je nach der Art und dem Zustand des zu fördernden Guts ist eine Änderung der Abmessungen zwischen dem Förderluftausgang und der Leitung bzw. deren Endstück sowie des Abstandes der einander zugelegenen Endkanten erforderlich. Eine effektive Förderung ohne Verstopfungen ist zu erreichen, wenn die angegebenen Verhältniswerte eingehalten werden.

In der Zeichnung ist ein nachfolgend näher beschriebenes Ausführungsbeispiel der Erfindung dargestellt. Es zeigt:
- Fig. 1: einen Teil einer Sämaschine mit einem erfindungsgemäßen Fördersystem und
- Fig. 2: eine Vergrößerung eines Abschnitts des Fördersystems aus Figur 1.

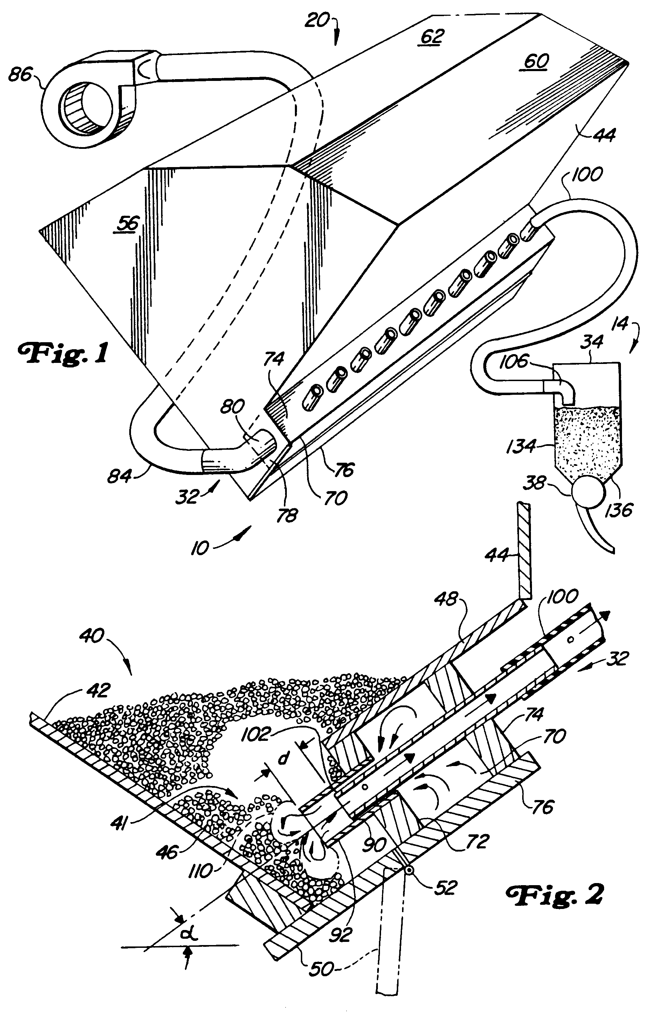

Figur 1 zeigt einen Teil einer Sämaschine 10 oder einer ähnlichen Maschine zum Einbringen von Saatgut in den Boden, z. B. eine Einzelkornsämaschine mit einem sich quer erstreckenden Hauptrahmen. Eine Vielzahl von Reihensäeinheiten 14 sind jeweils mit Abstand zueinander über die Breite des Hauptrahmens vorgesehen, um Saatgut in den Boden in zueinander parallelen Reihen abzulegen. Anstatt einer Sämaschine könnte auch ein Düngegerät zum Ausbringen von granuliertem Mineraldünger vorgesehen werden.

Ein Behälter 20 wird von dem Hauptrahmen getragen, und ein erfindungsgemäßes Fördersystem, das allgemein mit 32 bezeichnet ist, liefert Saatgut von dem als Haupt- oder Zentralbehälter dienenden Behälter 20 zu einzelnen entfernten Zweitbehältern 34 auf jeder der Reihensäeinheiten 14. Eine Saatgutzumeßvorrichtung 38 dosiert die Abgabe des Saatguts aus dem Zweitbehälter 34 zu einem herkömmlichen Säschar zur Ablage in eine Furche, die von einem Furchenöffner der Reihensäeinheit 14 gebildet wird.

Der Behälter 20 enthält einen sich aufrecht und quer erstreckenden Vorratsraum 40, um eine Menge an Saatgut aufzunehmen und es in einfacher Weise durch einen Bodenbereich 41 in das Fördersystem 32 abzugeben. Der Behälter 20 ist mit aufrechten vorderen und rückwärtigen Wänden 42 und 44 versehen, an die sich nach innen konvergierende Bodenteile 46 und 48 anschließen, um das Saatgut dem Bodenbereich 41 zuzuleiten. Eine an der untersten Stelle vorgesehene Putztür 50 ist bei 52 eingehängt, um wahlweise einen Zugang zu dem Bodenbereich 41 und somit zu dem Aufnahmebereich des Fördersystems 32 zu ermöglichen oder zu schließen. Nach dem Sävorgang evtl. noch übrig gebliebenes Saatgut kann ebenfalls durch diese Putztür 50 entfernt werden. Die Seiten des Behälters 20 sind durch Wände 56 geschlossen.

Eine Decke 60 mit einer Einlaßklappe 62 schließt den oberen Bereich des Behälters 20 ab. Wenn die Klappe 62 und die Putztür 50 geschlossen sind, ist der Behälter 20 so dicht abgeschlossen, daß er während des Betriebs unter Druck gesetzt werden kann.

Wie am besten aus Figur 2 hervorgeht, erstreckt sich der rückwärtige Bodenteil 48 von der rückwärtigen Wand 44 aus nach innen und endet im wesentlichen mittig des Behälters 20 und oberhalb des gegenüberliegenden vorderen Bodenbereichs 46. Ein Luftverteiler 70, der sich im wesentlichen über die Breite des Behälters 20 erstreckt, enthält eine vordere Wand 72, die sich von der vorderen Kante des rückwärtigen Bodenteils 48 aus und zu diesem senkrecht verlaufend nach unten erstreckt. Der Luftverteiler 70 weist auch eine rückwärtige Wand 74 auf, die parallel zu der vorderen Wand 72 verläuft. Ein Boden 76 schließt den unteren Bereich des Luftverteilers 70 ab, während der rückwärtige Bodenteil 48 die obere Begrenzung des Luftverteilers 70 bildet, so daß dieser schließlich einen im wesentlichen rechteckförmigen Querschnitt erhält, wie dies gezeigt ist. Schließlich wird der Luftverteiler 70 an seinen Seiten von Endwänden 78 verschlossen, wobei an einer der Endwände 78 ein Lufteinlaß 80 angebracht ist. Eine Luftzufuhrleitung 84 ist mit dem Lufteinlaß 80 verbunden und anderenends an einen Ausgang eines einen konstanten Druck aufbauenden Gebläses 86 angeschlossen, das Druckluft in den Luftverteiler 70 fördert.

Eine Vielzahl von Förderluftausgängen 90 sind in der Querrichtung mit Abstand zueinander auf der Länge der vorderen Wand 72 des Luftverteilers 70 vorgesehen. Die Förderluftausgänge 90 sind gerade Rohrlängen einer Leitung mit einem kreisrunden Querschnitt und Endstücken 92, die sich in den unteren Bereich der Saatgutmenge innerhalb des Behälters 20 erstrecken. Die inneren, d. h. in Figur 2 rechten Enden der Förderluftausgänge 90 enden bündig mit der inneren, d. h. in dem Luftverteiler 70 gelegenen Fläche der vorderen Wand 72. Vorzugsweise ist für jede Reihensäeinheit 14 ein eigener Förderluftausgang 90 vorgesehen.

Eine Leitung 100, z. B. ein Rohr oder ein Schlauch, für das Saatgut erstreckt sich durch die rückwärtige Wand 74 des Luftverteilers 70 in den Förderluftausgang 90. Diese Leitung 100 weist ebenfalls einen kreisrunden Querschnitt auf mit einem Durchmesser, der kleiner ist als der innere Durchmesser eines Förderluftausgangs 90. Im montierten Zustand verläuft die Mittenachse des sich in den Luftverteiler 70 erstreckenden Bereichs der Leitung 100 unter einem Winkel von ca. 20 bis 25 Grad zu der Horizontalen. Die Leitung 100 kann grundsätzlich einteilig ausgebildet sein und direkt in den Behälter 20 und/oder den Zweitbehälter 34 münden. Es kann aber auch vorteilhaft sein, die Leitung 100 teilweise aus einem biegsamen und durchsichtigen Schlauch zu bilden und die Anschlüsse der Leitung 100 an den Behälter 20 und den Zweitbehälter 34 über ein Endstück 102 bzw. ein Abgabeende 106 vorzunehmen, wie es in diesem Ausführungsbeispiel vorgesehen ist. Das Endstück 102 der Leitung 100 weist mit seiner freien Endkante einen Abstand - d - zu der entsprechenden Endkante des Endstücks 92 des Förderluftausgangs 90 auf und ist von dieser aus nach innen, d. h. zu dem Luftverteiler 70 hin, versetzt, wobei der Abstand - d - innerhalb eines Bereichs von ungefähr 12,7 mm bis 76,2 mm verstellbar ist, um die Austragsrate des Saatguts verändern zu können. Die Leitung 100 ist in der rückwärtigen Wand 74 des Luftverteilers 70 gleitend aufgenommen, so daß der Abstand - d - durch eine Bewegung der Leitung 100 bzw. deren Endstück 102 in ihrer Längsrichtung eingestellt werden kann. Die Leitung 100 erstreckt sich von der rückwärtigen Wand 74 des Luftverteilers 70 aus nach hinten und nach oben und reicht bis zu einem Abgabeende 106 (sh. Fig. 1) in dem Zweitbehälter 34, um eine sich selbst drosselnde Vorrichtung zu bilden, die nachfolgend im einzelnen beschrieben wird.

Luft, die in den Luftverteiler 70 geblasen wird, strömt durch die Förderluftausgänge 90 zwischen der inneren Oberfläche jedes Förderluftausgangs 90 und der äußeren Oberfläche des betreffenden Endes der diesem Ausgang zugeordneten Leitung 100 bzw. des Endstücks 102 . Diese Luft bildet im Bereich des Förderluftausgangs 90 einen Überdruck. Ein kuppelförmiges Gebilde 110 aus Luft und Saatgut (sh. Fig. 2) bildet sich innerhalb der Menge des Saatguts an dem Endstück 92 des Förderluftausgangs 90. Die die kuppelförmige Umgebung 110 durchströmende Luft wird durch die Leitung 100 wieder abgeführt, und zwar in einer Richtung, die bei diesem Ausführungsbeispiel der Eingangsrichtung der Luft entgegengesetzt ist. Diese strömende Luft fegt Saatgut aus dem kuppelförmigen Gebilde 110 in das Endstück 102 der Leitung 100. Die in die Leitung 100 geförderten Saatgutkörner werden mittels der aus dem kuppelförmigen Gebilde 110 ausströmenden Luft dem Abgabeende 106 zugetragen. Der Winkel alpha, den die Längsmittenachse der Leitung 100 in bezug auf die Horizontale einnimmt, und das Maß des Eintauchens des Endstücks 102 in den Förderluftausgang 90 tragen dazu bei, zu verhindern, daß sich Saatgut innerhalb der Leitung 100 aufbaut, das eine Verzögerung oder ein Hindernis im Aufbau des Saatguttransports bei der Inbetriebnahme des Gebläses 86 bewirken könnte, so daß keine Verstopfung entsteht.

Der Winkel alpha der Leitung 100 in dem Saatgut beträgt vorzugsweise 35 Grad in bezug auf die Horizontale; er kann aber geändert werden, um die Eintrittsrate des Saatguts zu verändern und die Leistung für Leitungen 100 mit unterschiedlicher Größe zu optimieren. Ein steilerer Winkel verringert die Saatgutaustragsrate, während ein flacherer Winkel diese erhöht. Unterhalb von 20 bis 25 Grad kann sich die Leitung 100 mit Saatgut zusetzen und hinsichtlich des Transports von Saatgut zu dem Zweitbehälter 34 wirkungslos werden. Eine Vergrößerung des Abstands - d - zwischen den Enden der Endstücke 92 und 102 vergrößert die Austragsrate, während eine Verringerung des Abstands - d- diese verkleinert. Bei den nachfolgend genannten Abmessungen der Leitungen 100 wird ein Transport von Saatgut bei einem Abstand von mehr als 76,2 mm (3 inch) vollkommen unterbleiben. Bei einen Abstand unterhalb von 12,7 mm (1/2 inch) wird sich die Leitung 100 zusetzen.

Zusätzlich zu der Veränderung des Winkels alpha und des Abstands - d - kann die Austragsrate an Saatgut auch durch eine Änderung des Luftdrucks und der Größe, insbesondere des Querschnitts der Leitung 100 verändert werden. Auch eine Änderung der Höhe der Leitung 100 wird die Austragsrate des Saatguts verändern.

Die Trennung, d. h. der Abstand zwischen der äußeren Oberfläche des Endstücks 102 und der inneren Oberfläche des Förderluftausgangs 90 wird in bezug auf die Größe der einzelnen Saatgutkörner vorzugsweise relativ klein gehalten, so daß während des Transports Saatgut nicht zwischen den genannten Oberflächen in den Luftverteiler 70 zurückwandern kann. Die Benutzung von Rohren mit Innendurchmessern von 25,4 mm (1 inch) und 40,38 mm (1,59 inch) für die Leitung 100 bzw. den Förderluftausgang 90 sorgt für gleichmäßige Öffnungen für die Luftein- und Luftausströmung und verhindert, daß Mais, Sojabohnen und weitere Saatgutkörner gleicher Größe in den Luftverteiler 70 gelangen.

Jeder Zweitbehälter 34 hat Seitenwände 134 und einen Bodenbereich 136, der sich zu der Zumeßvorrichtung 38 hin öffnet. Das Abgabeende 106 der Leitung 100 erstreckt sich durch den oberen Bereich der Seitenwände 134 und ist in dem Zweitbehälter 34 derart angeordnet, daß es sich nahe einer Seitenwand 134 und sich nach unten öffnend erstreckt. Wenn Saatgut durch die Leitung 100 geliefert wird und sich innerhalb des Zweitbehälters 34 zu dem Abgabeende 106 hin aufbaut, tritt eine Einschränkung der Luftbewegung durch das Abgabeende 106 ein. Wenn das Saatgut einen vorbestimmten Pegel in dem Zweitbehälter 34 erreicht hat, wird das Abgabeende 106 soweit verschlossen, (sh. Fig. 1), daß das Saatgut nicht mehr durch die Leitung 100 befördert werden kann und somit die Saatgutzufuhr abbricht. Wenn das Saatgut mittels der Zumeßvorrichtung 38 abgeführt wird und somit der Pegel in dem Zweitbehälter 34 absinkt, fällt die Behinderung wieder weg und die Luftströmung erhöht sich zu einem ausreichenden Maß, so daß eine Saatgutabfuhr wieder beginnen kann. Der Transport des Saatguts in den Zweitbehälter 34 geht so lange weiter, bis das Saatgut wieder den vorbestimmten Pegel erreicht hat.

## Patentansprüche

1. Fördersystem (32) für körniges Gut, insbesondere für eine Sämaschine (10) zum Ausbringen von Saatgut, mit einem Behälter (20) für das Gut, wenigstens einer Reihensäeinheit (14), wenigstens einer Leitung (100), die einenends zur Aufnahme von Gut direkt oder über ein Endstück (102) in den Behälter (20) mündet und anderenends Gut an die Reihensäeinheit (14) abgibt, und einem Gebläse (86), das über einen Förderluftausgang (90) den Behälter (20) unter Druck setzt, gekennzeichnet durch eine Anordnung des Förderluftausgangs (90) und der Leitung (100) bzw. des Endstücks (102) derart, daß ihre einander zugelegenen Mündungen benachbart sind, und daß die Förderluft aus dem Förderluftausgang (92) in einer Richtung in das Gut geblasen wird und in einer anderen Richtung zu der Leitung (100) geleitet wird.

2. Fördersystem nach Anspruch 1, dadurch gekennzeichnet, daß die Leitung (100) bzw. das Endstück (102) koaxial zu und innerhalb des Förderluftausgangs (90) und mit Abstand zu diesem angeordnet ist.

3. Fördersystem nach Anspruch 1 oder 2, dadurch gekennzeichnet, daß eine Längsmittenachse der Leitung (100) bzw. des Endstücks (102) und des Förderluftausgangs (90) unter einem Winkel insbesondere von mehr als 20 Grad zu der Horizontalen verläuft.

4. Fördersystem nach Anspruch 3, dadurch gekennzeichnet, daß der Winkel ca. 35 Grad beträgt.

5. Fördersystem nach einem oder mehreren der vorherigen Ansprüche, dadurch gekennzeichnet, daß die Leitung (100) bzw. das Endstück (102) innerhalb des Förderluftausgangs (90) vor dem Förderluftausgang (90) endet.

6. Fördersystem nach einem oder mehreren der vorherigen Ansprüche, dadurch gekennzeichnet, daß die Neigung der Längsmittenachse und/oder der endseitige Abstand zwischen dem Förderluftausgang (90) und der Leitung (100) bzw. dem Endstück (102) veränderbar ist.

7. Fördersystem nach einem oder mehreren der vorherigen Ansprüche, dadurch gekennzeichnet, daß die Leitung (100) bzw. das Endstück (102) und der Förderluftausgang (90) einen kreisförmigen Querschnitt aufweisen.

8. Fördersystem nach einem oder mehreren der vorherigen Ansprüche, dadurch gekennzeichnet, daß für mehrere Reihensäeinheiten (14) mehrere Förderluftausgänge (90) und mehrere Leitungen (100) bzw. Endstücke (102) vorgesehen sind, die in einen gemeinsamen Luftverteiler (70) eingebaut sind.

9. Fördersystem nach Anspruch 8, dadurch gekennzeichnet, daß der Luftverteiler (70) unter anderem von einer vorderen und einer rückwärtigen Wand (72, 74) umgeben ist, wobei sich der Förderluftauslaß (90) mit der Leitung (100) bzw. deren Endstück (102) durch eine Öffnung in der vorderen und die Leitung (100) bzw. das Endstück (102) durch eine Öffnung in der rückwärtigen Wand (74) koaxial zu der gemeinsamen Längsmittenachse erstrecken.

10. Fördersystem nach einem oder mehreren der vorherigen Ansprüche, dadurch gekennzeichnet, daß die Leitung (100) anderenends in einen Zweitbehälter (34) mündet, von wo aus das Gut mittels einer Zumeßvorrichtung (38) zu dem Boden abgegeben wird.

11. Fördersystem nach Anspruch 10, dadurch gekennzeichnet, daß die Leitung (100) mittels eines Abgabeendes (106) an den Zweitbehälter (34) angeschlossen ist, dessen auslaßseitige Kante in dem Zweitbehälter (34) in der Höhe eines vorgegebenen Füllstands gelegen ist.

12. Fördersystem nach einem oder mehreren der vorherigen Ansprüche, dadurch gekennzeichnet, daß unterhalb des Förderluftausgangs (90) eine Putztür (50) in dem Behälter (20) vorgesehen ist.

13. Verfahren zum pneumatischen Austragen von Gut, insbesondere von Saatgut, aus einem unter Druck stehenden Behälter (20) mit einem in diesen mündenden Förderluftausgang (90) und einer Leitung (100) bzw. einem Endstück (102) der Leitung (100) zur Entfernung des Guts, dadurch gekennzeichnet, daß mittels des dem Förderluftausgang benachbarten Förderlufteingangs (90) unter Druck stehende Luft derart in das Gut eingeblasen wird, daß sich eine kuppelförmige Umgebung mit schwebenden Gutteilchen ergibt und die Luft mit dem Gut durch die Leitung (100) bzw. deren Endstück (102) in einer von ihrer Eingangsrichtung verschiedenen Richtung abgeleitet wird.

14. Verfahren nach Anspruch 13, dadurch gekennzeichnet, daß die Luft in einer der Eingangsrichtung entgegengesetzten Richtung ausströmt.

15. Verfahren nach Anspruch 13 oder 14, dadurch gekennzeichnet, daß die Leitung (100) in einen Zweitbehälter (34) führt, in dem das Gut vor der Abgabe zum Boden zwischengespeichert wird.

16. Verfahren nach Anspruch 15, dadurch gekennzeichnet, daß die Leitung (100) bzw. ein diese abschließendes Abgabeende (106) an einer vorbestimmten Füllstandshöhe in dem Zweitbehälter (34) endet und nach unten offen ist.

17. Verfahren nach einem oder mehreren der vorherigen Ansprüche 13 - 16, dadurch gekennzeichnet, daß die Luft durch einen vorzugsweise ringförmigen Raum zwischen dem Förderluftausgang (90) und der Leitung (100) bzw. deren Endstück (102) in das in dem Behälter (20) befindliche Gut geblasen wird.

18. Verfahren nach einem oder mehreren der vorherigen Ansprüche 13 - 16, dadurch gekennzeichnet, daß die Leitung (100) bzw. deren Endstück (102) konzentrisch in dem Förderluftausgang (90) angeordnet ist und zwischen deren Enden ein vorzugsweise veränderbarer Abstand besteht.

19. Fördersystem bzw. Verfahren nach einem oder mehreren der vorherigen Ansprüche, gekennzeichnet durch ein sich aus den folgenden Abmessungen ergebendes Verhältnis zur Bildung des Abstands zwischen dem Förderluftausgang (90) und der Leitung (100) bzw. deren Endstück (102):
Innendurchmesser des Förderluftausgangs (90) = 39,62 mm
Außendurchmesser der Leitung (100) bzw. deren Endstück (102) = 25,4 mm
Abstand der Endkanten des Förderluftausgangs (90) und der Leitung (100) bzw. deren Endstück (102) = 12,7 mm bis 76,2 mm.

20. Fördersystem bzw. Verfahren nach einem oder mehreren der vorherigen Ansprüche, gekennzeichnet durch eine Anordnung des Förderluftausgangs (90) und der Leitung (100) bzw. des Endstücks (102) zueinander derart, daß eine Begrenzung der Bewegung des Guts und dessen Volumenstroms in die Leitung (100) erreichbar ist.

## Claims

1. System (32) for conveying granular material, especially for a sowing machine (10) for carrying out seeds, comprising a container (20) for the material, at least one row sowing unit (14), at least one pipeline (100) which at one end opens out directly or via an end piece into the container (20) to receive the material and at the other end delivers the material to the row sowing unit (14), and a blower (86) which puts the container (20) under pressure via a conveyor air exit (90),
**characterised by** an arrangement of the conveyor air exit (90) and of the pipeline (100) or the end piece (102), in such a way that their related outlets are adjacent and that the conveyor air is blown out of the conveyor air exit (92) in one direction into the material and in the other direction led into the pipeline (100).

2. Conveyor system according to claim 1,
**characterised in that** the pipeline (100) or the end piece (102) is arranged coaxially with and inside the conveyor air exit (90) and at a distance from same.

3. Conveyor system according to claim 1 or 2,
**characterised in that** a longitudinal central axis of the pipeline (100) or the end piece (102) and of the conveyor air exit (90) runs at an angle especially of more than 20 degrees to the horizontal.

4. Conveyor system according to claim 3,
**characterised in that** the angle is approximately 35 degrees.

5. Conveyor system according to one or more of the preceding claims, **characterised in that** the pipeline (100) or the end piece (102) ends inside the conveyor air exit (90) in front of same.

6. Conveyor system according to one or more of the preceding claims, **characterised in that** the incline of the longitudinal central axis and/or the distance between the conveyor air exit (90) and the pipeline (100) or the end piece (102) at their ends is adjustable.

7. Conveyor system according to one or more of the preceding claims, **characterised in that** the pipeline (100) or the end piece (102) and the conveyor air exit (90) have a circular cross-section.

8. Conveyor system according to one or more of the preceding claims, **characterised in that** a plurality of conveyor air exits (90) and a plurality of pipelines (100) or end pieces (102), which are fitted into a common air diffuser (70), are provided for a plurality of row sowing units (14).

9. Conveyor system according to claim 8,
**characterised in that** the air diffuser (70) is surrounded amongst other things by a front and a back wall (72, 74), the conveyor air exit (90) extending with the pipeline (100) or its end piece (102) through an aperture in the front wall and the pipeline (100) or the end piece (102) extending through an aperture in the back wall (74) coaxially with the common longitudinal central axis.

10. Conveyor system according to one or more of the preceding claims, **characterised in that** the pipeline (100) discharges into a secondary container (34), from where the material is delivered to the ground by means of a metering device (38).

11. Conveyor system according to claim 10,
**characterised in that** the pipeline (100) is connected to the secondary container (34) by means of a discharge end (106) whose exit-side edge is placed in the secondary container (34) at the height of a given fill level.

12. Conveyor system according to one or more of the preceding claims, **characterised in that** a cleaning door (50) is provided in the container (20) below the conveyor air exit (90).

13. Method of pneumatically delivering material, especially seeds, from a pressurized container (20) with a conveyor air exit (90) opening into same and a pipeline (100) or end piece (102) of the pipeline (100) to take the material away,
**characterised in that** air which is under pressure is blown, by means of the conveyor air entry point (90) adjacent to the conveyor air exit into the material in such a way that a dome-shaped area is produced with suspended particles of the material and the air is carried away with the material through the pipeline (100) or its end piece (102) in a different direction from the direction of its admission.

14. Method according to claim 13, **characterised in that** the air flows out in the opposite direction from the direction of its admission.

15. Method according to claim 13 or 14, **characterised in that** the pipeline (100) leads into a secondary container (34) in which the material is temporarily stored before being released on to the ground.

16. Method according to claim 15, **characterised in that** the pipeline (100) or a delivery end (106) terminating same ends in the secondary container (34) at a pre-determined fill level height and is open at the bottom.

17. Method according to one or more of the preceding claims 13 - 16, **characterized in that** the air is blown through a preferably annular space between the conveyor air exit (90) and the pipeline (100) or its end piece (102) into the material situated in the container (20).

18. Method according to one or more of the preceding claims 13 - 16, **characterised in that** the pipeline (100) or its end piece (102) is arranged concentrically in the conveyor air exit (90) and there is a preferably adjustable distance between their ends.

19. System or method for conveying granular material according to one or more of the preceding claims,
**characterised by** a ratio, arising from the following measurements, for forming the distance between the conveyor air exit (90) and the pipeline (100) or its end piece (102):
Internal diameter of the air conveyor exit (90) = 39.62 mm
External diameter of the pipeline (100) or its end piece (102) = 25.4 mm
Distance between the end edges of the air conveyor exit (90) and the pipeline (100) or its end piece (102) = 12.7 mm to 76.2 mm.

20. System or method according to one or more of the preceding claims, **characterised by** an arrangement of the conveyor air exit (90) and the pipeline (100) or the end piece (102) relative to one another such that it is possible to limit the movement of the material and the volume of its flow into the pipeline (100).

## Revendications

1. Système d'entraînement (32) pour un matériau granulaire, notamment pour un semoir (10) servant à épandre une semence, comportant un récipient (20) pour le matériau, au moins une unité de semage en lignes (14), au moins une canalisation (100) qui, à une extrémité, débouche dans le récipient (20) pour recevoir le matériau directement ou par l'intermédiaire d'une pièce d'extrémité (102), et délivre, à son autre extrémité, le matériau à l'unité de semage en lignes (14), et un ventilateur (86) qui met en pression le récipient (20), par l'intermédiaire d'une sortie (90) pour l'air d'entraînement, caractérisé en ce que la sortie (90) pour l'air d'entraînement et la canalisation (100) ou la pièce d'extrémité (102) sont disposées de telle sorte que leurs embouchures, qui sont tournées l'une vers l'autre, sont voisines et que l'air d'entraînement sortant par la sortie (92) de l'air d'entraînement est projeté dans une direction à l'intérieur de le matériau et est dirigé dans une autre direction vers la canalisation (100).

2. Système d'entraînement selon la revendication 1, caractérisé en ce que la canalisation (100) ou la pièce d'extrémité (102) est disposée coaxialement à et à l'intérieur de la sortie (90) pour l'air d'entraînement et à distance de cette dernière.

3. Système d'entraînement selon la revendication 1 ou 2, caractérisé en ce que l'axe médian longitudinal de la canalisation (100) ou de la pièce d'extrémité (102) et de la sortie (90) pour l'air d'entraînement fait un angle notamment de plus de 20 degrés par rapport à l'horizontale.

4. Système d'entraînement selon la revendication 3, caractérisé en ce que l'angle est égal à environ 35 degrés.

5. Système d'entraînement selon une ou plusieurs des revendications précédentes, caractérisé en ce que la canalisation (100) ou la pièce d'extrémité (102) se termine à l'intérieur de la sortie (90) pour l'air d'entraînement en avant de la sortie (90) pour l'air d'entraînement.

6. Système d'entraînement selon une ou plusieurs des revendications précédentes, caractérisé en ce que l'inclinaison de l'axe médian longitudinal et/ou la distance, côté extrémité, entre la sortie (90) pour l'air d'entraînement et la canalisation (100) ou la pièce d'extrémité (102) est variable.

7. Système d'entraînement selon une ou plusieurs des revendications précédentes, caractérisé en ce que la canalisation (100) ou la pièce d'extrémité (102) et la sortie (90) pour l'air d'entraînement ont une section transversale circulaire.

8. Système d'entraînement selon une ou plusieurs des revendications précédentes, caractérisé en ce que pour plusieurs unités de semis en lignes (14) il est prévu plusieurs sorties (90) pour l'air d'entraînement et plusieurs canalisations (100) ou pièces d'extrémité (102), qui sont montées dans un distributeur d'air commun (70).

9. Système d'entraînement selon la revendication 8, caractérisé en ce que le distributeur d'air (70) est entouré notamment par une paroi avant et une paroi arrière (72,74), la sortie (90) pour l'air d'entraînement traversant, avec la canalisation (100) ou sa pièce d'extrémité (102), une ouverture aménagée dans la paroi avant, et la canalisation (100) ou la pièce d'extrémité (102) traversant une ouverture ménagée dans la paroi arrière (74), coaxialement à l'axe médian longitudinal commun.

10. Système d'entraînement selon une ou plusieurs des revendications précédentes, caractérisé en ce que la canalisation (100) débouche, par son autre extrémité, dans un second récipient (34), d'où le matériau est délivré en direction du sol au moyen d'un dispositif de dosage (38).

11. Système d'entraînement selon la revendication 10, caractérisé en ce que la canalisation (100) est raccordée au second récipient (34) au moyen d'une extrémité de sortie (106), dont le bord côté sortie est disposé dans le second récipient (34) à hauteur d'un niveau de remplissage prédéterminé.

12. Système d'entraînement selon l'une ou plusieurs des revendications précédentes, caractérisé en ce qu'une porte (50) pour le nettoyage est prévue dans le récipient (20) au-dessous de la sortie (90) pour l'air d'entraînement.

13. Procédé pour l'épandage pneumatique d'une matière, notamment d'une semence, d'un récipient (20) placé sous pression et comportant une sortie (90) pour l'air d'entraînement, qui débouche dans ce récipient, et une canalisation (100) ou une pièce d'extrémité (102) de la canalisation (100) pour retirer la matière, caractérisé en ce que de l'air sous pression est injecté au moyen de l'entrée (90) pour l'air d'entraînement, qui est voisine de la sortie pour l'air d'entraînement, dans la matière de telle sorte qu'on obtient un enveloppement, en forme de coupole, avec des particules de matière flottantes et que l'air contenant la matière est évacué par l'intermédiaire de la canalisation (100) ou de sa pièce d'extrémité (102) dans une direction différente de la direction d'entrée.

14. Procédé selon la revendication 13, caractérisé en ce que l'air sort dans une direction opposée à la direction d'entrée.

15. Procédé selon la revendication 13 ou 14, caractérisé en ce que la canalisation (100) débouche dans un second récipient (34), dans lequel la matière est stockée temporairement avant son épandage sur le sol.

16. Procédé selon la revendication 15, caractérisé en ce que la canalisation (100) ou une extrémité de sortie (106), qui forme la terminaison de cette canalisation, se termine à une hauteur de remplissage prédéterminée dans le second récipient (34) est ouverte vers le bas.

17. Procédé selon une ou plusieurs des revendications précédentes 13-16, caractérisé en ce que l'air est injecté dans la matière située dans le récipient (20), en traversant un espace de préférence annulaire présent entre la sortie (90) pour l'air d'entraînement et la canalisation (100) ou sa pièce d'extrémité (102).

18. Procédé selon une ou plusieurs des revendications précédentes, 13-16, caractérisé en ce que la canalisation (100) ou sa pièce d'extrémité (102) est disposée concentriquement dans la sortie (90) pour l'air d'entraînement et leurs extrémités sont séparées par une distance de préférence variable.

19. Système d'entraînement ou procédé selon une ou plusieurs des revendications précédentes, caractérisé par un rapport, obtenu à partir des dimensions indiquées ci-après, pour la formation de la distance entre la sortie (90) pour l'air d'entraînement et la canalisation (100) ou sa pièce terminale (102) :
diamètre intérieur de la sortie (90) pour l'air d'entraînement = 39,62 mm
diamètre extérieur de la canalisation (100) ou de sa pièce d'extrémité (102) = 25,4 mm
distance des bords d'extrémité de la sortie (90) pour l'air d'entraînement et de la canalisation (100) ou de sa pièce d'extrémité (102) = 12,7 mm à 76,2 mm.

20. Système d'entraînement ou procédé selon une ou plusieurs des revendications précédentes, caractérisé par une disposition relative de la sortie (90) pour l'air d'entraînement et de la canalisation (100) ou de la pièce d'extrémité (102) de telle sorte qu'on peut obtenir une limitation du déplacement de la matière et de son flux volumique dans la canalisation (100).
